# EUROPEAN PATENT APPLICATION

(11) **EP 4 786 369 A1**
(43) Date of publication of application: **05.08.2026**
(21) Application number: 25154841.8
(22) Date of filing: 29.01.2025
(51) Int. Cl.: B65G 1/04, F16M 7/00

(54) **AUTOMATED STORAGE AND RETRIEVAL SYSTEM FOR UNEVEN FLOORS**

(71) Applicant: AutoStore Technology AS, 5578 Nedre Vats (NO)
(72) Inventor: AUSTRHEIM, Trond, 5578 Nedre Vats (NO); KLUNGLAND, Kjell Tore, 5578 Nedre Vats (NO); FITJE, Martin, 5578 Nedre Vats (NO); AARSETH, Simen, 5578 Nedre Vats (NO)
(74) Representative: Kilburn & Strode LLP

(57) **Abstract**

There is described a grid base for an automated storage and retrieval system of the type that comprises a plurality of vertically extending structural upright members disposed to form a storage grid having a plurality of vertically extending storage columns, within each of which one or more storage containers may be stored, alone or in a stacked configuration. Usually, on such storage grids, a rail system is provided on which one or more container-handling vehicles travel and perform any storage/retrieval operations concerning the aforementioned storage containers. The grid base comprises a plurality of height-adjustable foot devices which support a number of grid base rails over a floor. Since the foot devices are height-adjustable, the automated storage and retrieval system maybe stably assembled on a relatively uneven floor. Further, in this manner, the storage containers, or stacks thereof, may be supported on a virtually perfectly horizontal plane defined by said grid base rails, which facilitates the automated storage and/or retrieval operations performed by the container handling vehicles.

## Description

### TECHNICAL FIELD

This disclosure describes an automated storage and retrieval system which may be used on uneven floors. This disclosure also describes a grid base and/or a grid for an automated storage and retrieval system as described herein, a kit of parts for assembling a grid base, a grid and/or an automated storage and retrieval system as described herein, and related methods.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated as needed as goods enter and leave the warehouse.

Warehouse workers may be assisted by robotic pickers and by automated inventory management systems. Automated transit systems may also be implemented in traditional warehouse set ups to move goods from their inventory location to a picking and/or packing station.

An alternative to a traditional warehouse set up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged above the grid, along which robotic container-handling vehicles configured to lift containers from the grid can travel. The container handling vehicles are configured to transport containers from the grid and to deliver them to ports or stations situated at the periphery of the grid so that the goods from within the container can be picked and packed. The bins or containers are usually stacked on the floor.

In such systems, those containers which contain more in-demand goods or parts tend to remain at or close to the top, whilst containers which contain less often used goods or parts tend to remain deeper within the stacks, and are thus less easily or quickly accessed when needed. However, in some applications, such as grocery, faster access to a larger number of containers may be necessary. There may also be a need for 'staging', wherein items are pre-picked and stored in the grid before use or delivery.

Grid-based systems as described herein are usually therefore installed on virtually perfectly flat floors, i.e., floors that are flat within strict tolerances, otherwise the containers may not be properly stacked, and/or the storage and retrieval operations carried out by the robotic container handling vehicles may be compromised.

The present disclosure sets out to at least mitigate any drawbacks associated with the prior art. One or more aspects of the invention are laid out in the appended claims.

### BRIEF DESCRIPTION OF THE DRAWINGS

The disclosure will now be described in more detail in connection with a number of arrangements shown in the accompanying drawings, in which:
Fig. 1 shows a perspective view of a storage and retrieval system comprising a grid and a plurality of robotic container-handling vehicles configured to retrieve and/or rearrange goods stored within the grid;
Fig. 2 shows, schematically, a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing robotic operations described herein;
Figs. 5A-B, are side elevations of a grid for an automated storage and retrieval system as described herein, and in particular:

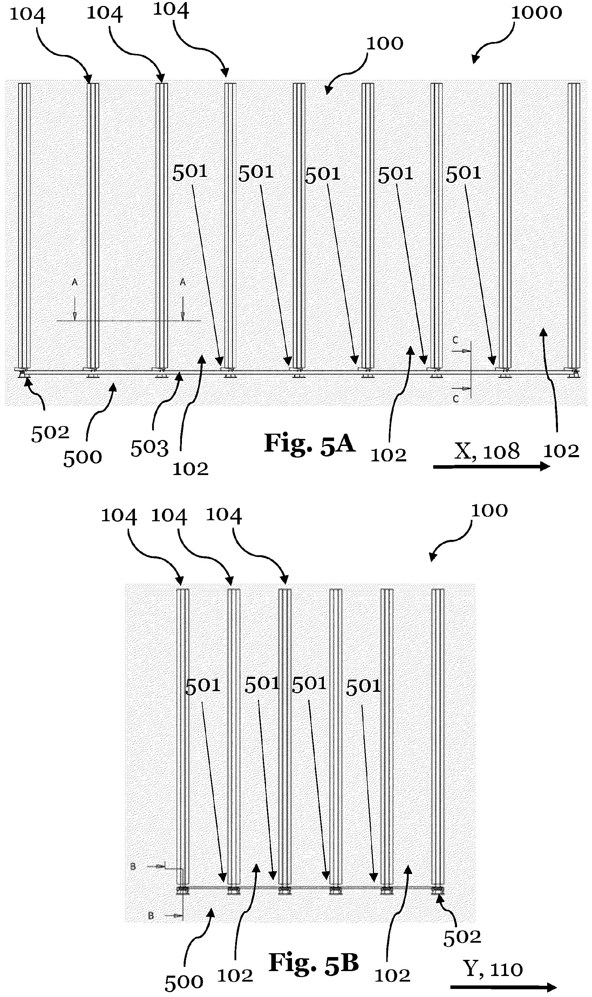

Fig. 5A is a front side elevation, showing a longitudinal extension of the grid; and,
Fig. 5B is a lateral side elevation, seen from an angle which is 90 degrees to the angle of sight of Fig. 5A, showing a transversal extension of the same grid;

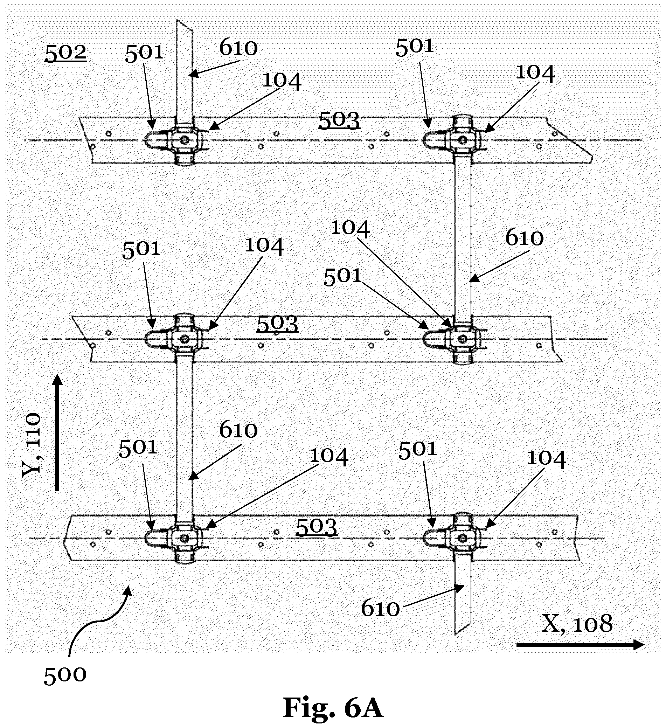

Figs. 6A-C are cross-sectional views along section lines A-A, B-Band C-C shown in Figs. 5A-B, and in particular:
Fig. 6A reveals the parallel disposition of grid base rails of the grid, with staggered spacers disposed orthogonally with respect to the grid base rails;

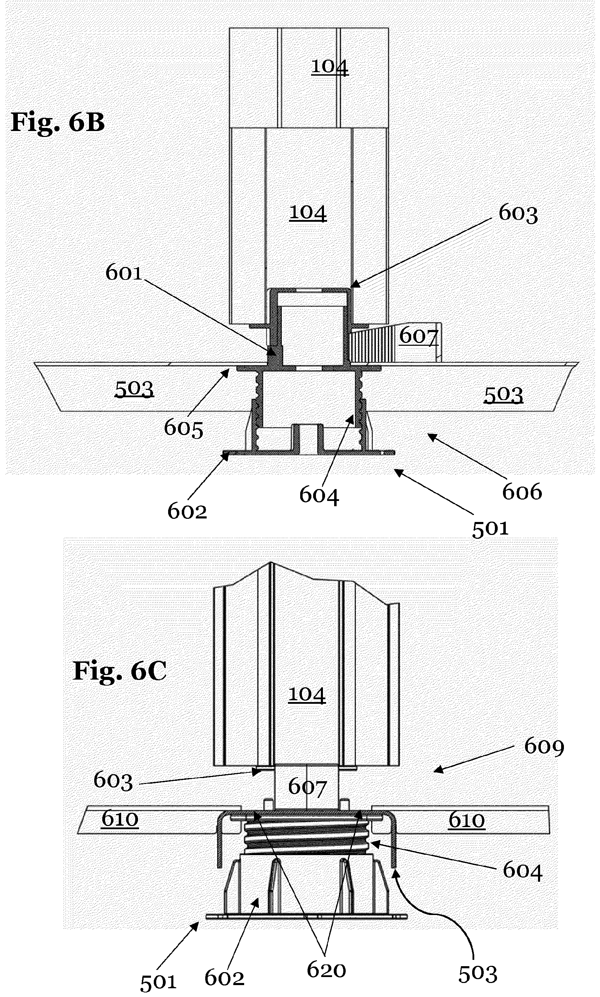

Fig. 6B reveals cross-sectionally the components constituting an individual height-adjustable foot device supporting a vertically extending structural upright member of the grid of Figs 5A-B; and,
Fig 6C is similar to Fig. 6B, but it reveals cross-sectionally how the height-adjustable foot device also supports one of the grid base rails, and it also reveals the cross-sectional shape of the supported grid base rail;

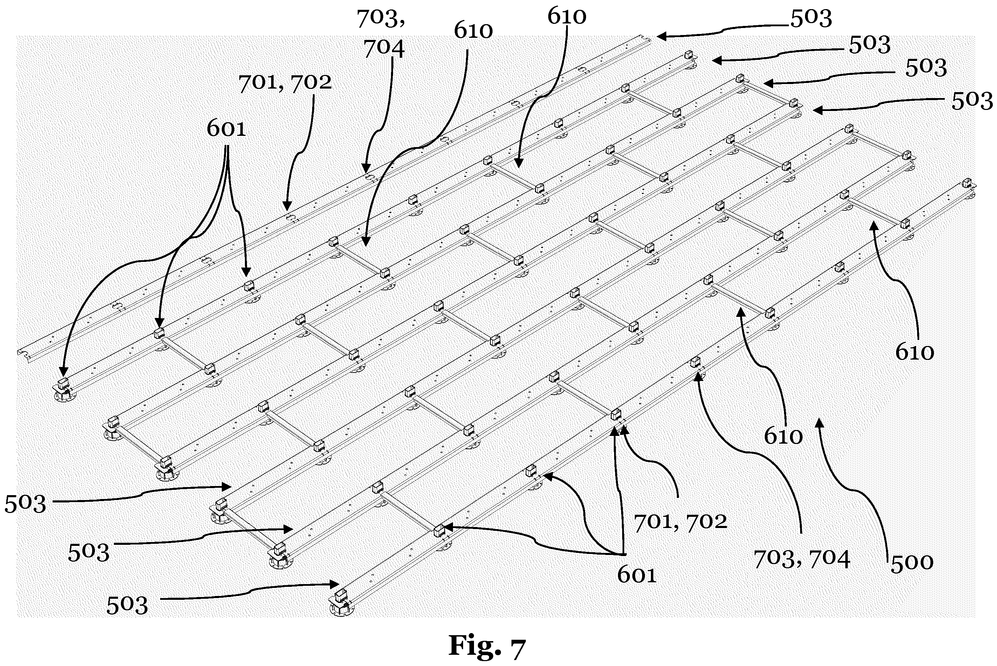

Fig. 7 is a top perspective view of the base of the grid shown in Figs. 5A-B (with 6 rows of columns in the transversal direction, and 9 lines of columns in the longitudinal direction), with in addition a length of a grid base rail shown on the lefthand side of said grid;

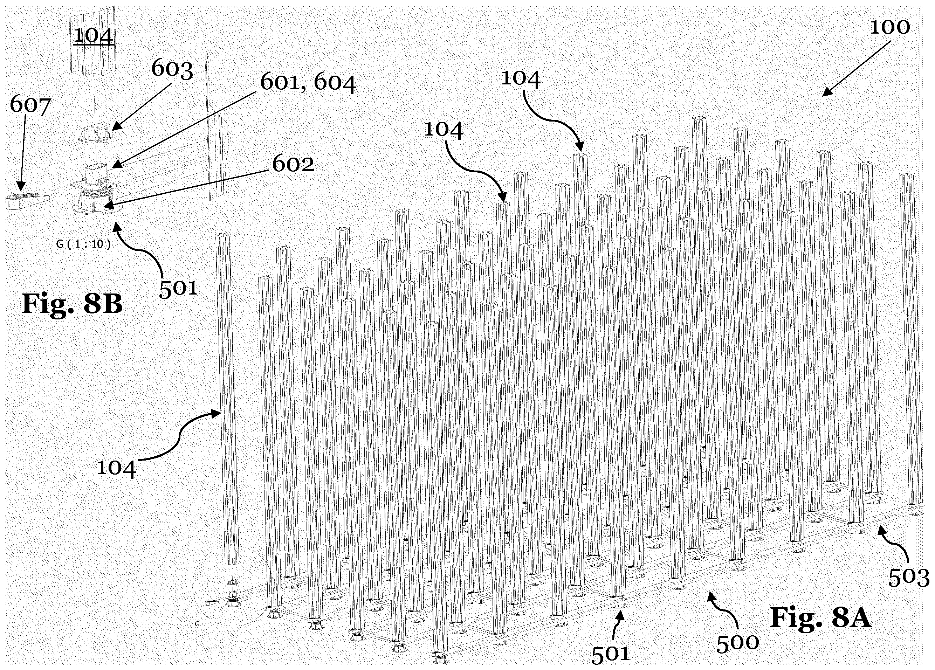

Figs. 8A-B illustrate the installation of each vertically extending structural upright member on the grid base shown in Fig. 7, and in particular:
Fig. 8A is a perspective view of the grid of Figs. 5A-B, though showing one last vertically extending structural upright member being installed; and,
Fig. 8B is an enlargement of detail G of Fig. 8A, showing the upright member being received on a corresponding height-adjustable foot device;

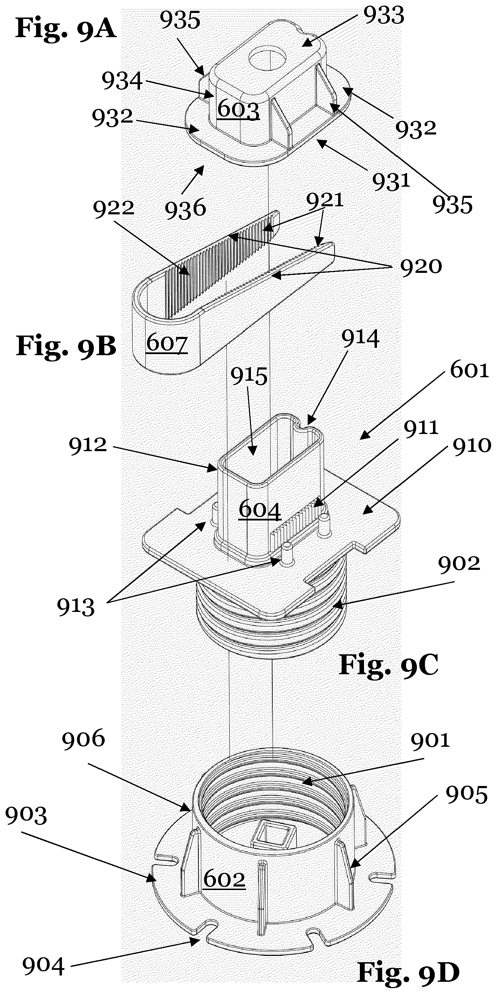

Figs. 9A-D are an exploded view of one of the height-adjustable foot devices shown in Figs 5A-B, 6A-C and 8A-B, with the height-adjustable foot device comprising a (lower) adjustable foot and an (upper) adjustable wedge device, and in particular:
Fig. 9A shows the wedge device upper part;
Fig. 9B shows the wedge device lower part;
Fig. 9C shows the adjustable foot male (or upper) component; and,
Fig. 9D shows the adjustable foot female (or lower) component;

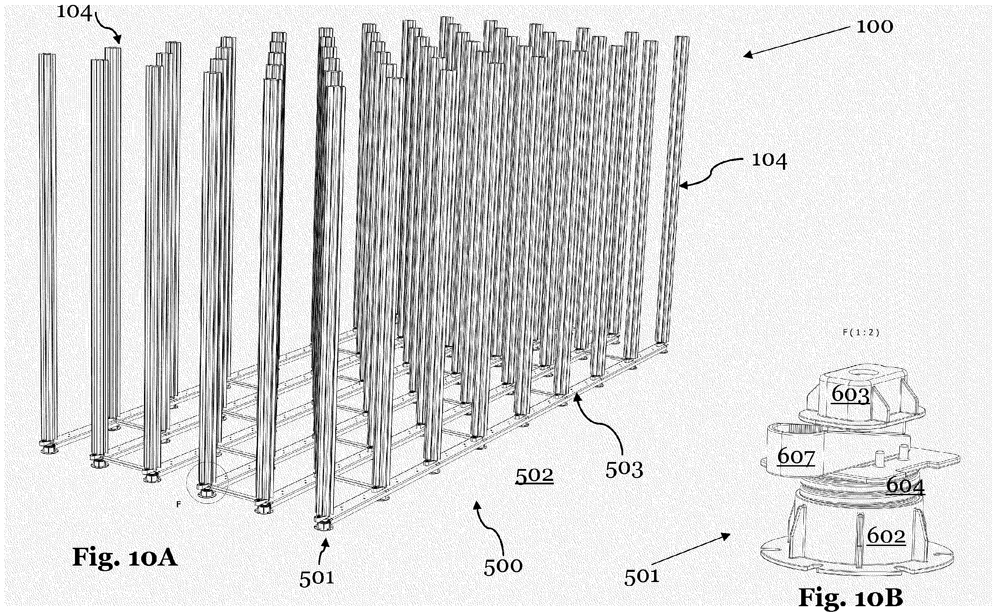

Figs. 10A-B show, in use, the height-adjustable foot devices of Figs. 9A-D, and in particular:
Fig. 10A is a perspective view of the grid of Figs. 5A-B; and,
Fig. 10B is an enlargement of detail F of Fig. 10A, with the corresponding upright member omitted for clarity of representation;

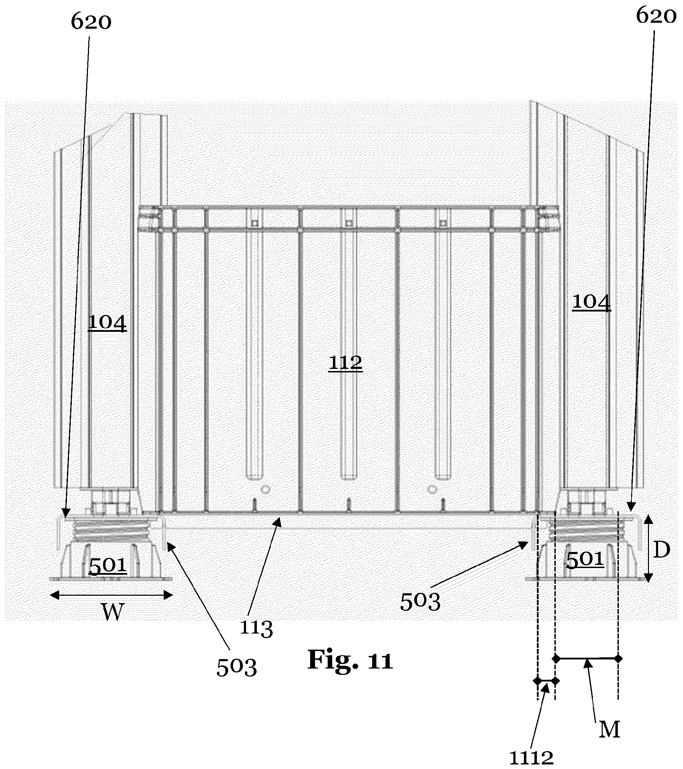

Fig. 11 is a view of a particular portion of the grid of Figs 5A-B, Figs. 8A-B and Figs. 10A-B, with one container supported on one long side on one of the grid base rails;

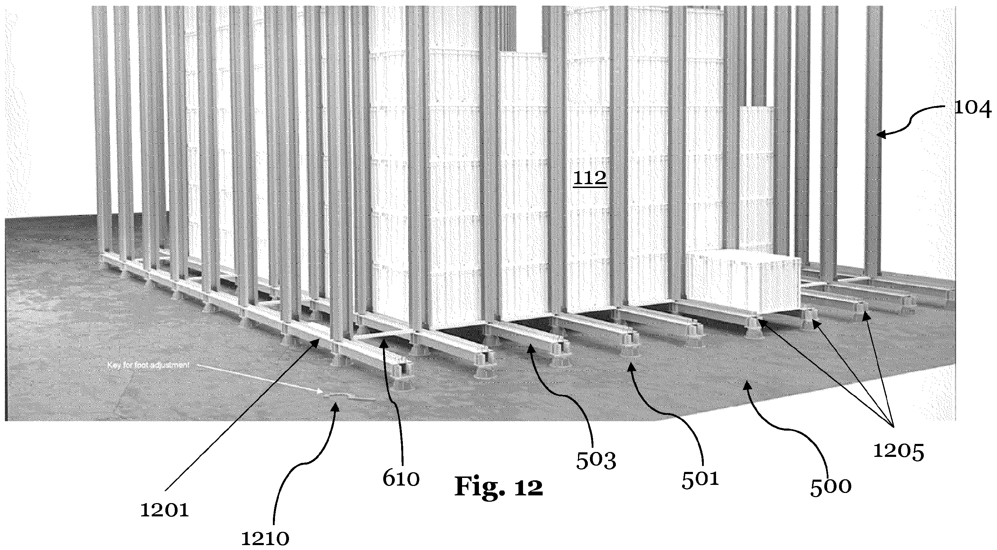

Fig. 12 is a perspective view of another implementation of grid-based storage and retrieval system in principle similar to that of Figs 5A-B, Figs. 8A-B and Figs. 10A-B, but showing stacks of containers, instead of containers in isolation, and also showing different implementations of grid base rails, spacers, spacer arrangements and height-adjustable foot devices compared to those of Figs 5A-B, Figs. 8A-B and Figs. 10A-B; Fig. 12 also shows a key for foot adjustment;

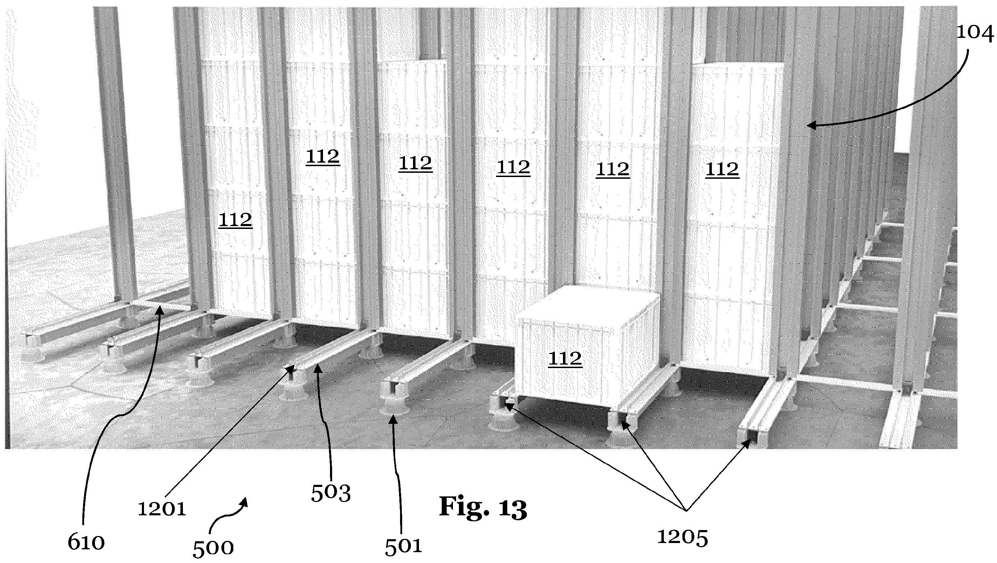

Fig. 13 is also a perspective view of the system of Fig. 12, seen from a different angle;

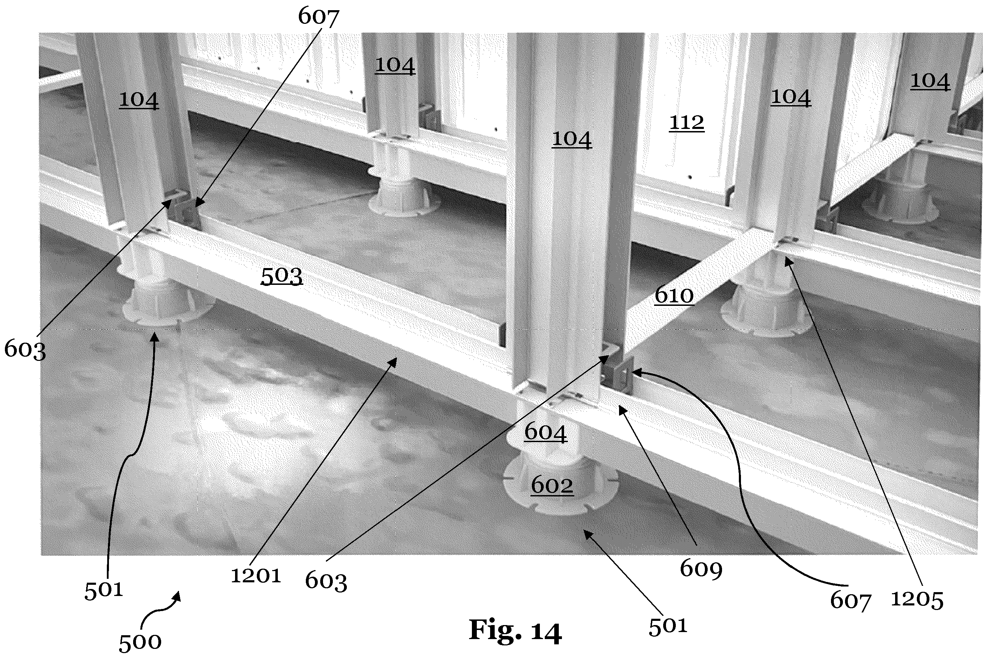

Fig 14 is a detail view of a portion of the system of Figs. 12 and 13;

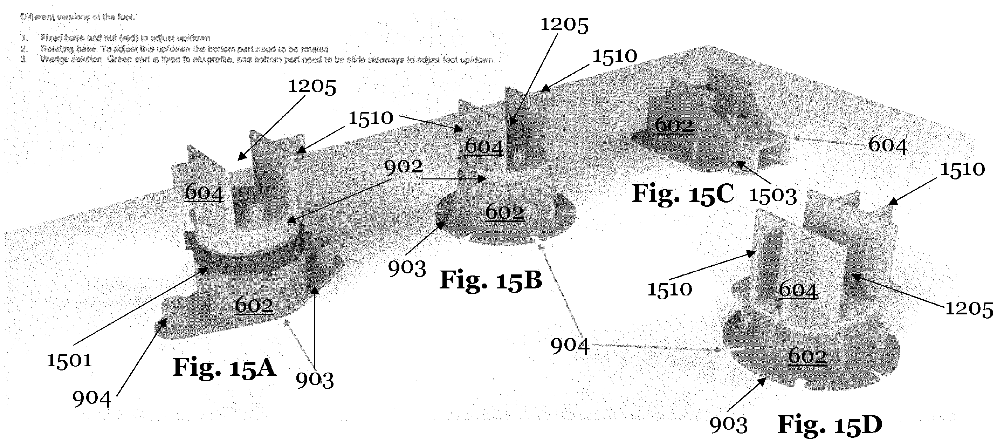

Figs. 15A-D show different implementations of (lower) adjustable feet, as described herein;

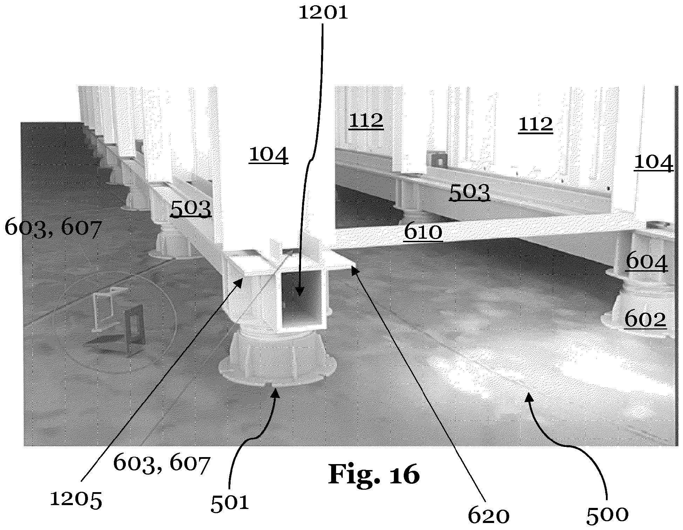

Fig 16 illustrates in more detail a different implementation of wedge device, as described herein; and,

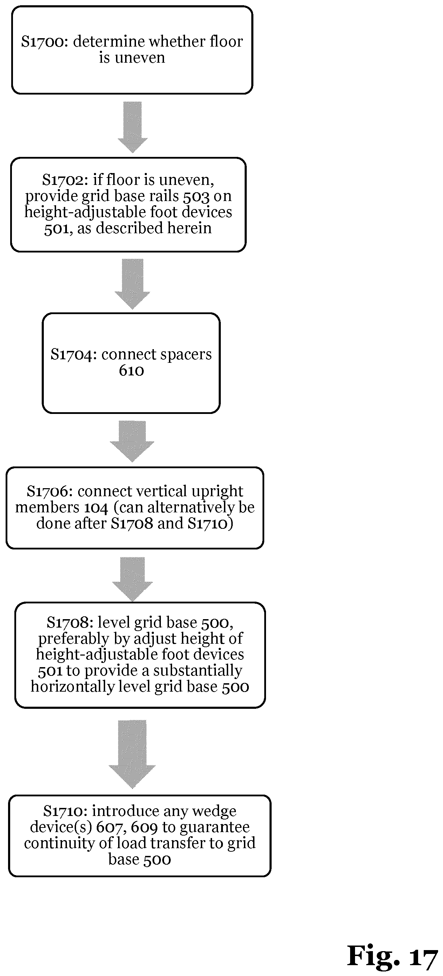

Fig. 17 is a flow-chart describing operations of assembling an automated storage and retrieval system on an uneven floor, as shown in Figs 5A-B, Figs. 8A-B and Figs. 10A-B, or as shown in Figs. 12-14.

### DETAILED DESCRIPTION

In overview, the disclosure relates to the concept of providing grid base rails mounted on foot devices, so that the grid base rails may run *over* a floor rather than *on* the floor, as known from the prior art. So far, in fact, it has only been known to provide any grid base rails of the type described herein, *on* a floor, meaning that, according to the prior art, the base rails would be in continuous contact with the floor. The inventors have appreciated that this may be problematic, especially in the case of relatively uneven floors, because the degree of unevenness then needs to be compensated in some way for the containers to stack properly, and for the robotic container-handling vehicles to run substantially parallel to the containers, with any deviations from the required degree of parallelism potentially causing troubles in the storage and retrieval operations.

Accordingly, the inventors have appreciated the benefits of de-coupling the grid base rails from close contact with the floor, or in other words of raising the grid base rails over the floor - to compensate for any floor unevenness. As described herein, the grid base rails run *over* the floor, that is they maintain at least a minimum distance from the floor, supported by appropriate foot devices. These foot devices could have, for example, respective different heights to compensate any deviations of the underlying floor from perfect or virtually perfect flatness. In other words, using an appropriate number of foot devices having, if required, different heights, the grid base rails can be made to run level, or substantially level (that is, horizontally or substantially horizontally or virtually perfectly horizontally) above the floor. In other words, the grid base rails may form or may define a virtually perfectly horizontal plane, over the uneven floor.

The disclosure also relates to height-adjustable foot devices to support the grid base rails as described hereinabove. There is an intrinsic benefit in providing the required foot devices as height-adjustable foot devices, so that a single type or design of height-adjustable foot device can be used throughout the same grid installation. Also, by providing height-adjustable foot devices, the height of the height-adjustable foot devices could be adjusted on-site, depending on the actual, local height of the floor, that is depending on the actual installation requirements.

The disclosure also relates to related structures, such as grids comprising a grid base as provided hereinabove, or an entire storage and retrieval system comprising a grid having a grid base as described herein. The disclosure also relates to a kit of parts for assembling a grid base or a grid or an automated storage and retrieval system as described herein. Finally, the disclosure also relates to method of providing a level grid base as described herein, that is a grid base comprising levelled grid base rails, that is grid base rails capable of providing a virtually perfectly horizontal base, laying on a notional perfect or virtually perfect horizontal plane, on which the containers can easily and stably be stacked in substantially perfectly vertical columns, as required with grid-base system of the type described herein.

### Automated storage and retrieval system overview

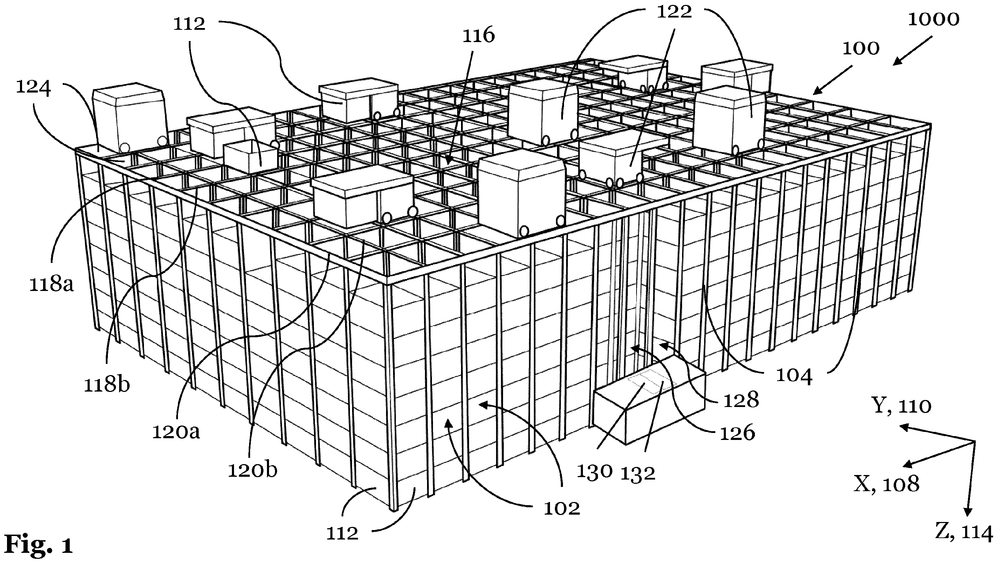

Referring to the system shown in Fig. 1, a grid 100 comprises a frame formed by a plurality of generally rectilinear, adjacent vertical columns 102 formed between vertical frame members or vertically extending structural upright members 104, with the grid 100 extending in the X and Y directions 108, 110, as shown in Fig. 1. The grid frame/structural upright members 104 may be fabricated of any appropriate material; for example, the members 104 may be formed of extruded aluminium. Storage containers or bins 112 are stacked on top of each other, traditionally in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or, to say it more simply, "robots" 122, 202, 204, which can be of a range of size, shape and function, are provided and configured to run on the rails 118, 120 and to transport bins 112 in both the X and Y directions 108, 110. The robots 122, 202, 204 are additionally configured to lift and lower bins 112 from/into the columns 102 in the Z direction 114, the bins 112 optionally being guided by the vertically extending structural upright members 104. The robots 122, 202, 204 access the bins 112 via access openings 124 situated above the columns 102 and formed between the rails 118, 120.

Some columns 102 may be used for alternative purposes than container storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid; however, ports can be located at any vertical position along the port columns 126, 128 . The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column 126, 128. As such, a port 130, 132 can comprise a conveyor (not shown in Fig. 1) onto which a bin 112 may be lowered and transported horizontally out of the port column 126, 128. The port columns 126, 128 include an opening or access point through which bins 112 can enter and leave the column.

Containers 112 can be transported along the top of the grid 100 to and/or from a port column 126, 128 by the robots 122, 202, 204, and from a port 130, 132 to a location outside the grid 100, which port 130, 132 may be an access station (not shown) for processing of the container 112 or its contents, such as a picking station for adding content to, or removing content from, the container 112. In alternative examples (not shown), the container 112 may be transported to a port of another grid on the same or another level, or to an external facility. Transport of containers 112 to and from the ports 130, 132 may be by any appropriate means (not shown) including conveyors, transport vehicles, lifts or robots.

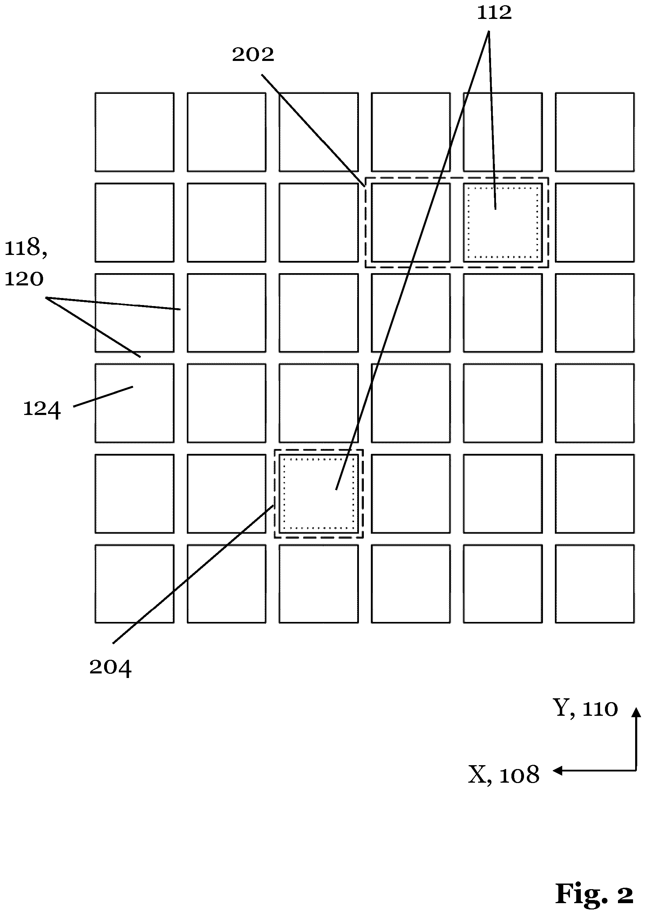

Referring now to the system shown in Fig. 2, the X-Y configuration of the rail system 116 can be seen in more detail, together with robots 202, 204 of different types. The rail system 116 includes rails 118, 120 defining between them vertical column access openings 124 for access to bins 112. The rails 118, 120 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 118, 120 may comprise a single track or multiple parallel tracks in each of the X and Y directions 108, 110.

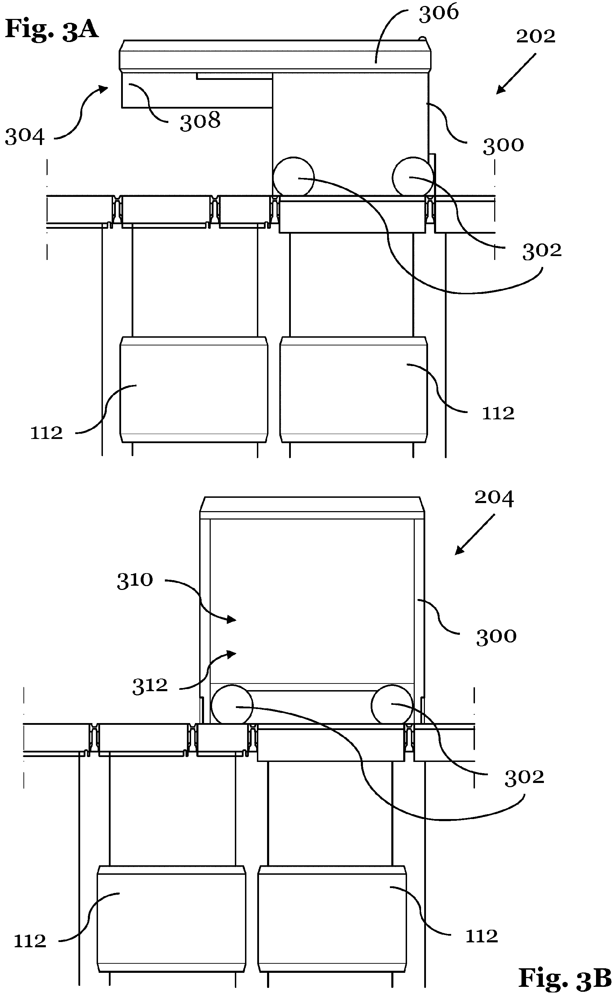

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 118, 120. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

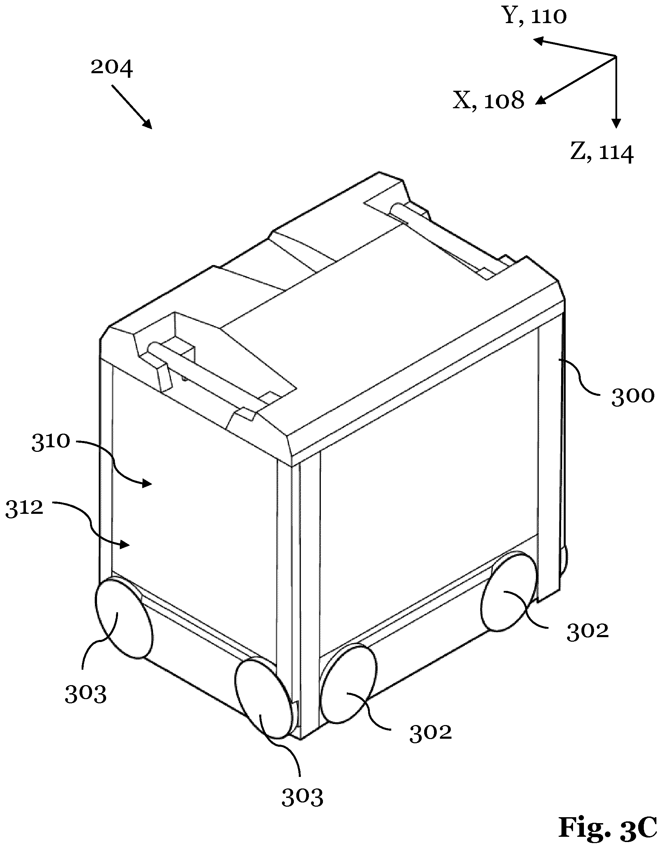

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

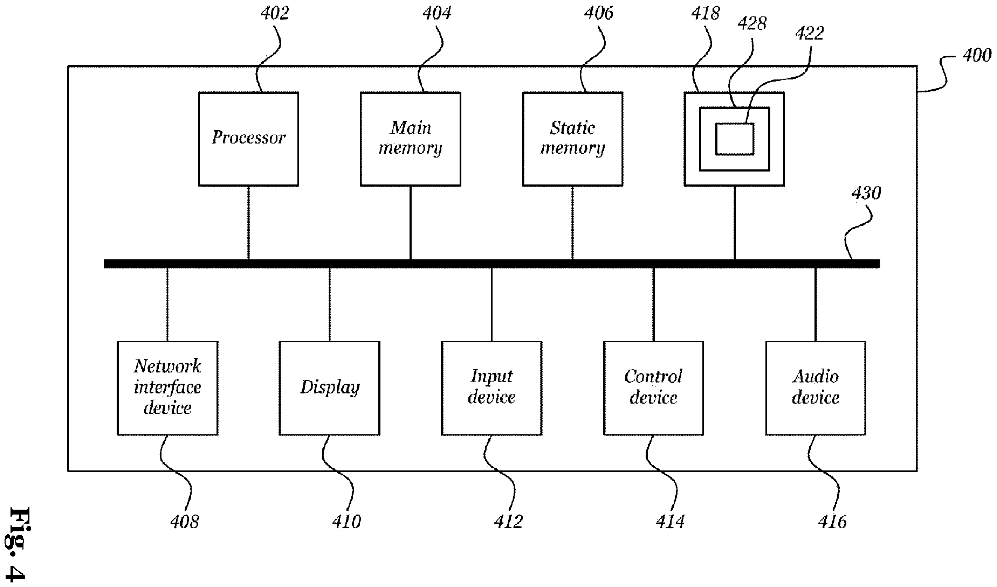

Control and monitoring of the automated storage and retrieval system 1000, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the computer methods described herein may form all or part of a computer-implemented method, or a system configured to perform the methods described herein.

With reference to Fig. 4, a processing system 400 suitable for carrying out the computer methods described herein will now be described. Fig. 4 shows a block diagram of one implementation of a processing system 400 in the form of a computing device within which a set of instructions for causing the computing device to perform any one or more of the computer methods described herein may be executed. In some systems, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the computer methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the computer operations and computer steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the computer methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various computer methods described herein may be implemented by a computer program. The computer program may include computer code arranged to instruct a computer to perform the functions of one or more of the various computer methods described herein. The computer program and/or the code for performing such methods may be provided to an apparatus, such as a computer, on one or more computer-readable media (CRM) or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and computer methods described herein.

In an arrangement, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system 1000

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary, as discussed above.

### Automated storage and retrieval systems 1000 for uneven floors

Referring now to Figs. 5A-B, there is shown a grid base 500 supporting a storage grid 100 of an automated storage and retrieval system 1000. The storage grid 100 comprises, in addition to the grid base 500, a plurality of vertically extending structural upright members 104 disposed to form the storage columns 102 of the storage grid 100, as explained above in connection with Figs. 1 and 2, for example. Each of the plurality of vertically extending storage columns 102 may receive one or more storage containers 112 stacked therein, in use (the containers 112 are not shown in Figs. 5A-B).

The grid base 500 is supported by a plurality of foot devices 501, as also shown in Figs 5A-B. These foot devices 501 each rest on an underlying floor 502, as shown. A plurality of grid base rails 503 can be seen extending in the longitudinal direction X 108. These grid base rails 503 are supported by the foot devices 501 above the floor 502, that is generally at a distance D from said floor 502 (D is shown in Fig. 11, for clarity of representation), and are configured to support the containers 112 thereon, as it will be described further below.

In the described implementation, a row of 9 vertically-extending structural upright members 104 is provided in the longitudinal direction X 108, as shown in Fig. 5A (with a corresponding row of 8 storage columns 102 provided on this side), and a row of 6 vertically extending structural upright members 104 is provided in the transversal Y direction 110, as shown in Fig. 5B (with a corresponding row of 5 storage columns 102 provided on this other side). The storage grid 100 of Figs. 5A-B therefore provides for a total of 40 columns 102 for storing a plurality of containers 112 in stacked configurations within said columns 102. The maximum height of the container stacks supported on the grid base rails 503 will be determined by the height of the storage grid 100, which is also the height of each of the individual storage columns 102. Other configurations would however be possible and will be apparent to the person skilled in the arts, without departing from the teachings of the present disclosure.

Fig. 6A corresponds to the cross-sectional view A-A of Fig. 5A. In this detailed view, three grid base rails 503 are seen from the top extending parallel to each other in the longitudinal X direction 108. This condition of parallelism is not essential for the implementation of the concepts described herein, though it is recognised as an important feature because it enables a better utilisation of the available storage volume in, for example, a given warehouse, as known in the arts. So that the grid base rails 503 run parallel and equidistant one from another, spacers 610 may be provided, as also shown in Fig 6A. Each spacer 610 takes the form of a metal bar or rod of predetermined length. In the arrangement of Fig. 6A, the spacers 610 are disposed in a staggered configuration, as shown, i.e. in a configuration connecting opposed pairs of rails 503 in correspondence of opposed pairs of foot devices 501, at alternative pairs of foot devices 501 and/or structural upright members 104, in each of the longitudinal and transversal directions X, Y 108, 110.

Fig. 6A also shows, cross-sectionally, the shape of each structural upright member 104. In particular, the cross section of each structural upright member 104 is tubular, with an inner tubular body of generally rectangular shape, having four guide members at each corner, which may participate in the containers' storage and retrieval operations by keeping the container 112 being lifted or lowered in position within these guide corner members, as known in the arts. No further details will, however, be necessary for the purposes of this disclosure, in relation to the shape and characteristics of the structural upright members 104. In fact, many alternatives will readily be apparent to the skilled person, within the teachings of the present application.

Fig. 6B corresponds to the cross-sectional view B-B of fig. 5B, and better illustrates the constitution of each foot device 501 described herein. In particular, each foot device 501 described herein has an adjustable height, as further explained below. This is regarded as an important feature of this disclosure. In fact, providing height-adjustable foot devices 501 means that the height at which each and every grid base rail 503 is supported on the height-adjustable foot devices 501 may be adjusted to compensate for any floor unevenness at the foot location - resulting in an essentially level, i.e. virtually perfectly horizontal, grid base 500, wherein each grid base rail 503 is configured to supports the containers 112 on a notional, perfectly horizontal (or at least virtually perfectly horizontal) plane (not shown).

In alterative arrangements, each foot device 501 might have a predetermined height, depending on the position at which the foot device 501 is to be utilised, thereby providing the same final effect, which is that of having the rails 503 on a common, horizontal notional plane, in readiness for supporting the storage containers 112 in a parallel configuration with respect to the rail system 116 mounted on the storage grid 100, as discussed with reference to Figs. 1 and 2. Nevertheless, it will be understood that the height-adjustability of the individual foot devices 501 may be a preferred solution, in terms of practicality and user-friendliness.

In its more complete implementation, each height-adjustable foot device 501 comprises four distinct parts 602, 604, 607, 603, we label as follows: 1) a lower foot component 602, which in the height-adjustable foot device 501 shown in Figs 6B-C is also a female foot component 602; 2) an upper foot component 604, which in the shown height-adjustable foot device 501 is also a male foot component 604, designed to threadedly engage with the lower/female foot component 602, as shown; 3) a lower wedge part 607; and, 4) an upper wedge part 603, which we can alternatively refer to as a height-adjustable upper component 603.

The lower and upper foot components 602, 604 together form a height-adjustable foot 606. The lower and upper wedge parts 607, 603 together form a wedge device 609. In the described arrangement, each height-adjustable foot device 501 comprises both a height-adjustable foot 606, at the bottom, which is the part designed to rest on the floor 502, and a (also height-adjustable) wedge device 609, which is instead designed to sit on a corresponding grid base rail 503, just above the height-adjustable foot 606, as shown in Fig. 6B. In more detail, it is possible to appreciate from Fig. 6B that an underside 605 of the grid base rail 503 rests on a flat portion (described in more detail later) of the upper foot component 604, with the lower wedge part 607 resting directly on top of the grid base rail 503.

Fig. 6C, which corresponds to cross-sectional view C-C of Fig. 5A, shows the same components and parts 606, 609 described in connection with Fig. 6B, from a 90 degrees angle, i.e. from the transversal direction Y 110, rather than the longitudinal direction X 108. The male-threaded portion of the upper foot component 604 is visible, though part of it is threadedly inserted into the lower foot component 502 (whose female thread is revealed in Fig. 6B). These features of the lower and upper foot components 802, 604 will be described in more detail and more completely below, with reference to Fig. 9.

Fig. 6C also shows further details of the spacers 610, and how they are coupled to the grid base rails 503, though this will be explained further with reference to Fig. 7. Fig. 6C also shows that, in the described arrangement, the grid base rails 503 have an inverted U-shaped cross section, with the underside 605 thereof resting on the upper foot component 604, and more specifically on its flat portion. Many different cross-sectional shapes would however be possible, and one alternative shape will be described hereinbelow, with reference to Figs 12-16.

The height-adjustable foot device 501 described herein and shown in Figs. 6B-C in some detail does not, therefore, only support the grid base profile 503 at a height that can be set and changed by changing the relative height of the upper foot component 604 on the lower foot component 602 via their threaded engagement, but it also supports the corresponding structural upright member 104 via the (also height-adjustable) wedge device 609.

There are, therefore, normally provided with each height-adjustable foot device 501 two tiers of height adjustability: 1) the height of the height-adjustable foot 606 may be adjusted, that is the height of the upper foot component 604 on the lower foot component may be adjusted by operating the threaded connection therebetween - which will determine the level of the associated grid base rail 503 at the location of the height-adjustable foot device 501; and, 2) the height of the height-adjustable upper component 603 (i.e., the upper part of the wedge device 603, as defined hereinabove) may, in addition and/or alternatively, be adjusted by adjusting the relative position of the lower and upper wedge device parts 607, 603.

The operation of the wedge device 609 will be described further below. However, it is now important to note that the wedge device 609 should be considered as an optional feature of the arrangement described herein, since it is only necessary to compensate for manufacturing tolerances related to the length of the structural upright members 104. In particular, if the structural upright members 104 were of a predetermined length, i.e. if they were within strict manufacturing tolerances, then the wedge devices 609 described herein would not be necessary because the grid's weight discharged downward via each structural upright member 104 would be directly born by the respective height-adjustable feet 606. However, this can only happen if there is structural continuity, that is, structural contact between the structural upright member 104 and the height-adjustable foot 606. When this may not be the case due to a shorter length of the structural upright member 104, then the wedge device 609 can be used to compensate for such shortness, to guarantee structural continuity and therefore weight transfer downward, onto the height-adjustable foot 606.

In practice, the height-adjustable upper component 603 may always be used to support the structural upright member 104, even when compensation for a shorter than expected length of the structural upright member 104 may not be required because the height-adjustable upper component 603 may directly and squarely rest on the upper foot component 604 described herein, without the need for wedging. In other words, the height-adjustable foot component 603 would have its height adjusted at least by virtue of the adjustability afforded by the height-adjustable foot components 602, 604, with the provision of the lower wedge part 607 and the resulting inclined interface between this component 607 and the height-adjustable upper component 603 being entirely optional, and being provided only in the case some measure of compensation is needed for shorter-than-expected structural upright members 104. Of course, herein the term "shorter" is to be interpreted in relative terms, which means that "shorter" should be taken relative to the longest length of the structural upright members 104 taken as a group, as it will be appreciated by the skilled person. Accordingly, the grid base rail 503 is always lifted from the underlying floor 502 and its underside 605 is rested at an adjustable height on the upper foot component 604, while the lower wedge part 607 is only needed if compensation is needed for shorter than expected structural upright members 104.

Referring now to Fig. 7, the whole grid base 500 of the storage grid 100 of Figs. 5A-B is shown in perspective, with visible all the 54 height-adjustable feet 606 and all 6 parallel grid base rails 503. The 20 spacers 610 are also shown in their staggered configuration described above. Next to the grid base 500, is shown a grid base rail 503 in isolation. The isolated grid base rail 503 is shown so that some of its detailed features are shown more clearly. In particular, visible at regularly spaced length intervals along the rail 503 are sets of five apertures 702 comprising one larger central generally rectangular aperture, and four smaller circular apertures, two on either side of the larger central aperture. These apertures 702 are configured to receive corresponding one or more protrusions 601 of the height-adjustable feet 606. These apertures 702 can therefore be more generally described as foot-mating features 701, and can more generally be designed to receive, or to be received by, as the case may be, the height-adjustable foot 606, or any particular features, parts or portions thereof, so that a connection is then created between the foot 501 and the rail 503. In this configuration, an upper projection or protrusion 601 (visible in Fig. 6B) of the upper foot component 604 is received in the larger central aperture 702, and a set of four smaller pins 913 (shown in Fig. 9C) are received, respectively, in the four smaller apertures 702. Accordingly, the apertures 702 allow the height-adjustable foot components 602, 604 to be placed in the intended places, i.e. connected in place, along the rails 503.

The lower wedge part 607, when present, sits on the grid base rail 503, as also shown in Figs. 6B-C, with its general U-shape (better described with reference to Fig. 9B) wrapping around the corresponding protrusion/projection 601 of the upper foot component 604 connected to the rail 503 as described above. Irrespective of the provision of the lower wedge part 607, the height-adjustable upper component 603 will be used to terminate the lower end of a corresponding structural upright member 104. The height-adjustable upper component 603 will either rest directly on said protrusion/projection 601, when the lower wedge pat 607 is not present, or it will rest on the lower wedge part 507, as shown in Fig. 6B. The longitudinal collocation of the lower wedge part 607, when present, around the protrusion/projection 601 as shown in Fig. 6B will determine the height of the height-adjustable upper component 603, and this positioning is designed to close any vertical gap that may otherwise be present between the grid base rail 503 and the structural upright member 104. In other words, the position of the height-adjustable upper component 603 maybe raised, when necessary, above the level dictated by the height of the projection/protrusion 601 by the presence of the lower wedge part 607. The extra height is regulated by the longitudinal position of the lower wedge part 607 on the rail 503c. This is enabled by a conical coupling existing between the lower wedge part 607 and the upper wedge part 603 (as the height-adjustable upper component 603 is also referred to, by virtue of the presence of this conical coupling). The interface between these two wedge parts 607, 603, which together form the wedge device 609, is defined by surfaces 920 and 931 shown in Figs. 9A-B.

In case of lengths of the structural upright members 104 within predetermined tolerances, the provision of the lower wedge part 607 is disposed of. It is only when any gaps existing between the lower ends of the structural upright members 104 and the rails 503 need to be eliminated, that the lower wedge parts 607 described herein will be used, interfacing with the components 603 via said conical coupling, i.e. via said inclined interface, as shown and described in connection with Figs. 8A-B, Figs. 9A-D and Figs. 10A-B. Said gaps are usually assessed after the lower ends of the upright members 104 have been provided with corresponding height-adjustable upper components 603, which is normally done to finish said lower ends, in preparation for installation to form the storage grid 100.

Fig. 7 also reveals pairs of slots 703 formed on either side of the apertures 702, which are provided for connecting the spacers 610. These slots 703 are visible in isolation from any spacers 610 in the isolated grid base rail 503, shown to the left of the grid base 500 shown in Fig. 7. On the grid base 500 as such, some of these pairs of slots 703 are covered by a correspondingly assembled spacer 610, as shown. The grid base 500 so prepared is configured to support, in use, one or more storage containers 112, as we will describe further below in connection with Fig. 11, for example. In Fig. 7, each storage container 112 of the first array of storage containers 112 directly resting on the levelled grid base 500 may be imagined as being positioned with its opposed, long base sides resting on corresponding opposed laterally extending portions 620, such as flanges 620 (see Fig. 6C), of parallel grid base rails 503, on either side. This disposition will be described in more detail below.

With continued reference to Fig. 7 and with reference now also to Figs. 8A-B, the grid base 500 is supported over the floor 502, at distances D as marked in Fig. 11. The distance D may be measured next to each height-adjustable foot device 501, or at any locations along the rails 503. Said distance D may be at least 1 cm or at least 5 cm or at least 10 cm or at least 15 cm or at least 20 cm, just as examples. The distance D will be a minimum if measured in correspondence of the `peak' level of the floor 502. The distance D will be a maximum if measured in correspondence of the 'valley' level of the floor 502. All other distances D associated with the grid base 500, and more specifically with the grid base rails 503 thereof, will be intermediate values between the minimum and maximum values of D, noting that such minimum and maximum values of D may or may not be measured next to any one of the height-adjustable foot devices 501.

As visible from for example Fig. 8A, the grid base 500 is configured such that the plurality of height-adjustable foot devices 501 corresponds to said plurality of vertically extending structural upright members 104. More specifically, this means that each of the height-adjustable foot devices 501 is located under a respective one of the vertically extending structural upright members 104. However, this ought not be the specific arrangement in all possible configurations. However, this is certainly seen an important feature, which ensures that the weight of the grid 100 is more-or-less equally shared through the upright members 104 and from there, with continuity of contact in the vertical direction Z 114, through each of the height-adjustable foot devices 501. In this way, the weight capacity of the grid base rails 503 may be fully utilised to support the containers 112, without the rails 503 having to bear, in addition, any or much of the weight of the grid itself. Fig. 8A shows a nearly completely installed grid 100, with just one last upright member 104 being installed at the leftmost corner thereof, as shown.

Fig. 8B, which is an expanded view of detail G of Fig. 8A (which relates to said last upright member 104 being installed), shows the vertical sequence of the parts and components at the location of one of the feet 501 on the grid 100. Starting from the floor 502, the lower foot component 602 rests on the floor 502; the upper foot component 604 is adjustably threaded into the lower foot component 602; the lower and upper foot components 602, 604 together form the height-adjustable foot 606, which is responsible for supporting, locally, one of the grid rails 503 at the desired horizontal level, with the grid rail 503 being received on the upper foot component 604 through one of its preconfigured apertures 702, as described above. Once the grid base rail 503 in in place on the height-adjustable foot 606, the lower end of the respective upright member 104 may be stacked on the height-adjustable foot 606, with or without the lower wedge part 607 and with or without the upper wedge part 603, which are together referred to as the wedge device 609 herein. The lower wedge part 607 may only be provided in conjunction with the upper wedge part 603, when wedging is necessary to compensate for any shortness in the length of the upright member 104, due to manufacturing tolerances. The upper wedge part 603 may still be provided, independently of the presence of the lower wedge part 607, to terminate neatly the lower end of the upright member 104, if no or very little compensation for these manufacturing tolerances is required. When the upper wedge part 603 is provided without the lower wedge part 607, it is more appropriate to refer to this part as the height-adjustable upper component 603. In this case, the height-adjustable wedge component is height-adjustable by virtue of the height-adjustability of the below height-adjustable foot device 606, but not because of the presence of any wedging with the lower wedge part 607. The wedging provided by the lower wedge part 607 is entirely optional, and when the lower wedge part 607 is not present, it may or may not be appropriate for the height-adjustable upper component 603 to be provided with the sloping surface 931 labelled in Fig. 9A. When sloping surface 931 is not required, then the height-adjustable upper component may terminate at the lower end with a flat truncation, as it will be appreciated.

Features of the heigh-adjustable foot devices 501 described herein will now be described in more detail in connection with Figs. 9A-D.

Figure 9A shows in more detail features of the height-adjustable upper component 603. It has a top, generally rectangular-shaped portion 933 designed for insertion into, and interference coupling with, the (tubular) lower end of the upright structural member 104. A peripheral wall 934 surrounds the rectangular-shaped top portion 933. From it, two sets of two parallel wings 935 extend perpendicularly on either of the rectangle's long sides, as shown. At the bottom, a flange 932 surrounds the top rectangular portion 933, and it also extends at right angles with respect to said peripheral wall 934, and also perpendicularly with respect to the wings 935. This component 603 is hollow inside, with a recess 936 which may be accessed from the bottom end, just below the flange 932, which recess 936 is designed for coupling with the corresponding tubular projection 601 at the top end of the upper foot component 604. Finally, though this is not visible from Fig. 9A due to the angle of the perspective, this component 603 may also have a lower inclined surface 931 for mating with a corresponding inclined surface 920 provided on the lower wedge part 607, as mentioned above, and as further described below. Said inclined surfaces 920, 931 together form a slope or inclined plane interface, which enables the height-adjustability of the wedge device 609 (when present).

Fig. 9B shows the features of the lower wedge part 607. We have already described its top inclined surface 920, which extends at the top of two prongs 921 of a generally U-shaped design for this part 607. Internally, on inward-looking faces of said prongs 921, corresponding sets of first teeth 922 are provided for engaging with complementary sets of second teeth 911 provided around the top tubular projection 601 of the upper foot component 604, as further described below.

Fig. 9C shows the features of the upper foot component 604. At the bottom end, a male threaded cylinder 902 is provided, for insertion and threaded engagement into the lower foot component 602. A flat portion 910 is provided just above the threaded cylinder 902, which will be normally used for supporting and locally levelling a grid base rail 503 at a required horizontal height. Projecting upwards from said flat portion 910, are four pins 913, as shown. The pins 913 are also configured to engage corresponding apertures 702 provided on the base grid rail 503 for receiving the upper foot component 604. Projecting upwards from said flat portion 910 is also the known top tubular (and generally rectangular) projection 601, which, just like the four pins 913, is also designed for engagement with a corresponding aperture 702 on the grid base rail 503. This projection 601 includes on opposite long sides thereof the second set of teeth 911 described above, which project from and a surrounding wall 912 of generally rectangular shape which extends perpendicular from said flat portion 910. A recess 915 is provided on the projection 601, as shown. Finally, a small detent 914 is formed on said upwardly extending wall 912, which may work as a guiding feature for receiving a corresponding guiding feature provided in the recess 936 of the height-adjustable upper component or upper wedge part 603.

Moving on to Fig. 9D, the lower foot component 602 has a generally circular base 903 with indents 904 which may be used for fixing the circular base 903 to the floor 502, for example using screws or bolts (not shown). Before the circular base 903 is filed to the floor 502, the indents 904 may be used for engaging with corresponding projections provided on an height-adjustment key 1210 (shown in Fig. 12) for rotating the circular base 903 circumferentially, so as to adjust the level of the upper foot component 604 on the lower foot component 602. A set of six wings or winglets 905 project from a circular body wall 906 of the lower foot component 602, which extends upwardly at right angles from the circular base 903. Inside said circular body wall 906 a female thread 901 is configured for engagement with the male thread of the threaded cylinder 902 of the upper foot component 604.

With reference now to Figs 10A-B, the complete grid 100 supported on the grid base 500 as described herein is shown, and then a detail of one of the height-adjustable foot devices 501 is also shown in magnified view (detail F of Fig. 5A). Each grid base rail 503 is supported on nine respective height-adjustable foot devices 501, as shown. There are six parallel grid base rails 503 in total. On each foot device 501 is also supported a respective vertically extending structural upright member 104, with continuity of weight transfer to the foot device 501 being assured by the presence of the wedge device 609, as described above. Once in place on the floor 502, the height of each height-adjustable foot device 501 may be adjusted by rotating the lower foot component 602, so as to change the relative distance between this component 602 and the upper foot component 604 situated thereon. This changes the height of the flat portion 910 on which a portion of the grid base rail 503 is supported, at the location of the height-adjustable foot device 501.

With reference now to Fig. 11, a container 112 is shown as being supported on level grid base rails 503. The container has a container underside or base 113, as shown. Only a small peripheral portion 1112 of the container's base 113, on each long side of the rectangular container 112, rests on one of the flanges 620 of one of the grid base rails 503 shown in Fig. 11. In other words, on each long side of the container 112, a small strip of the base 113 of the container 112 rests on the laterally extending flanges 620 of the respective grid base rail 503. The width of the lower foot device 602, and more particularly of the circular base 903 of the lower foot device 602 is described as W. W is larger than the distance M between opposed ends of opposed containers 112 stored in the grid 100 on the same grid base rail 503, as exemplified in Fig. 11. W is also slightly larger than M plus twice the width of the small supported peripheral portion 1112 on each side of each container 112. Since the maximum width of the grid base rail 503 measured at its supports 620 represents also the maximum value for M, it is preferable that W be larger than the maximum width of the bin-supporting grid base rails 503 at its supports 620. This provides the grid 100 with appropriate stability in respect of any bending moments acting on the height-adjustable feet 501.

Moving on to Fig. 12, the adjustment key 1210 is shown, which may be used for rotating on site the circular base 903 of each height-adjustable foot device 501, thereby changing the height of the upper foot component 604, as previously described. Alternatively, the upper foot component 604 may be rotated with respect to the lower foot component 602. Alternatively, not key may be used and the operation may be carried out manually, or by a dedicated robot. Importantly, Fig. 12 also shows an alternative design of grid base rail 503. The grid base rails 503 used in the implementation of Fig. 12 are of tubular design rather than having an inverted U-shaped cross-section, as shown in Fig. 6B. The tubular cross-sectional design comprises a tubular portion 1201 which is configured to be received in a corresponding recess 1205 provided on the height-adjustable foot device 501, as shown. More specifically, the recess 1205 is provided on the upper foot component 604. A protrusion or projection is now formed by the tubular design of the grid base rails 503 and is received in recessed portions 1205 of the foot devices 501, rather than the other way around, as previously described (when the protrusion 601 of the upper foot component 604 would be received in an aperture 702 provided on the U-shaped rails 503). Nevertheless, the containers 112 (stacks of which are shown in Fig. 12) are still supported on laterally extending flanges 620 of the grid base rails 503. Fig. 13 merely shows from a different angle the features already described in connection with Fig. 12. It will also be appreciated that the arrangement of the spacers 610 is, in this implementation, different that the arrangements of spacers 610 previously described in connection with Fig. 6A. More specifically, the spacers 610 now form parallel lines of spacers 61o extending in the transversal direction Y 110, as deducible from Figs 12 and 13.

Fig. 14 is similar to Figs. 12 and 13, though it shows some of the described features of this other implementation 100 of storage grid 100 more closely. The attention of the reader is drawn to a different implementation of wedge device 609 than the implementation described above. Details of this different wedge device 609 are better seen in Fig. 16. This device 609 still comprises a lower wedge part 607 and an upper wedge part 603, both now having an essentially standard wedge shape. Each of these two wedge parts 607, 603 has a wedge handle for adjusting the level of wedging achieved by the wedge device 609 as a whole.

Fig. 15A shows a slight constructional variation of the height-adjustable foot devices 501 described herein. The height-adjustable foot device 501 of Figure 15A still comprises adjustable lower and upper foot components 602, 604, but in addition it also includes a rotatable threaded nut 1501, as shown, which may be rotated for adjusting the relative distance of the two components 602, 604. In addition, the base 903 is no longer circular, but circular at the centre and elongated in to opposite directions. Further, the indents 904 are replaced by small hollow cylinders 904 projecting upwards from said base 903, as shown in Fig. 15A, which are still suitable, however for mechanical engagement for rotating the base 903, or for fixing it to the floor 502.

Figs 15A-B also show another slight constructional variation in that the height-adjustable foot device now shown only has a pair of opposed wing supports 1510 by which the flanges 620 of the grid base rails 603 are supported, in use. On the contrary, the implementations of foot devices 501 shown in Figs 12 to 14 and 16 have four opposed wing supports 1510, two on each side of the foot device 501, compatible with the height-adjustable foot 606 shown in Fig. 15D, which is the implementation of height-adjustable foot 606 used in the grid 100 of Figs. 12, 13, 14 and 16.

Fig 15C implements the height-adjustable foot 606 (that is the lower half of a complete height-adjustable foot device 501 as described herein) as a wedge device, via inclined interface 1503, as shown. This is another possibility for implementing a height-adjustable foot 606 within the present requirements, as will be appreciated by the skilled person.

Finally, Fig. 17 describes via a flow-chart a method of providing a level grid base 500 on an uneven floor 502 as described herein.

First, there may be a determination S1700 as to whether the floor 502 is uneven to an extent that it may require the presently described solution. Alternatively, the floor flatness may be within acceptable tolerances, and the present solution may be unnecessary, though it may still be used at the election of the end user. If the floor is sufficiently uneven, then a grid base 500 as described herein will preferably be provided S1702, that is, grid base rails 503 of the type described herein will be provided on foot devices 501 having variable heights to compensate for the floor's unevenness. The foot devices 501 may be intrinsically height-adjustable foot devices 501 as described herein (in which case, at step S1708, any necessary height adjustments are performed), or these maybe different devices 501 having different but appropriate heights to compensate the irregular shape of the floor 502. Once the (yet to be levelled or already levelled) grid base 500 has been implemented, a set of spacers 610 may be installed S1704 to provide for an adequate degree of parallelism between the rails 503. Then, the required structural upright members 104 may be connected S1706, thereby forming a grid 100 on the (yet to be levelled or already levelled) grid base 500. Only if needed, wedge devices may be provided to take up any gaps between the lower ends of the upright members 104, and the grid base rails 503, as described herein, to provide continuity of force transfer and reasonable spreading of grid weight on the feet devices 501.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

List of references used in the drawings, description and claims:
*1000* Automated storage and retrieval system; 100 grid; 102 storage column; 104 vertically extending, structural upright members; 108 longitudinal direction X; 110 transversal direction Y; 114 vertical direction Z; 112 bin or container; 113 underside of bin or container; 116 rail system; 118 a, b pairs of rails or tracks in the longitudinal direction; 120a, b pairs of rails or tracks in the transversal direction; 122, 202, 204 container-handling vehicle(s) ; 124 access opening; 126, 128 port columns; 130, 132 ports;
300 body of container-handling vehicle; 302 first set of wheels; 303 second set of wheels; 304, 312 lifting device; 306 cantilever element; 308 gripping device; 310 internal cavity;
400 processing system; 402 processor; 404 main memory; 406 static memory; 408 network interface device; 410 display device; 412 input device; 414 cursor control device;
416 audio device; 418 data storage device; 422 instructions; 428 machine-readable storage media; 430 bus;
500 grid base; 501 foot device; 502 floor; 503 grid base rail;
601 upper projection or protrusion; 602 lower foot component; 603 height-adjustable upper component or upper wedge part; 604 upper foot component; 605 underside of grid-base rail; 606 height-adjustable foot (comprising the lower foot component 602 and upper foot component 604); 607 lower wedge part; 609 wedge device (comprising the lower wedge part 607 and upper wedge part 603); 610 spacer; 620 laterally extending portions of grid base rails;
701 foot device mating feature(s); 702 apertures on grid base rail; 703 spacer coupling feature(s); 704 slots on grid base rail;
901 threaded cylinder (female); 902 threaded cylinder (male); 903 circular base of foot device 501; 904 indent(s) on circular base; 905 wings of circular base; 906 circular body wall of circular base; 910 flat portion of upper foot component 604; 911 second set of teeth of projection/protrusion 601 of upper foot component 604; 912 upwardly extending wall of projection/protrusion 601 of upper foot component 604; 913 pins of projection/protrusion 601 of upper foot component 604; 914 detent of projection/protrusion 601 of upper foot component 604; 915 recess of projection/protrusion 601 of upper foot component 604; 920 sloping surface on lower wedge part 607; 921 prongs of lower wedge part 607; 922 first set of teeth of lower wedge part 607; 931 sloping surface of upper wedge part 603; 932 flange of height-adjustable upper component or upper wedge part 603; 933 top portion of height-adjustable upper component or upper wedge part 603; 934 peripheral wall of height-adjustable upper component or upper wedge part 603; 935 wings of height-adjustable upper component or upper wedge part 603; 936 recess of height-adjustable upper component or upper wedge part 603;
1112 supported peripheral portion of container underside 113;
1201 tubular portion of grid base rail 503; 1205 recess provided on height-adjustable foot device 501; 1210 height-adjustment key;
1501 rotatable threaded nut; 1503 inclined interface of height-adjustable foot 606; 1510 opposed wing supports of upper foot component 604;
W width of lower foot device; D distance of grid baes rail from floor (level distance); M distance between opposed ends of parallel containers 112 stored in the grid 100 on the same grid base rail 503;
S1700 determination of floor unevenness; S1702 provision of grid base rails on foot devices; S1704 connection of spacers; S1706 connection of upright structural members; S1708 levelling of grid base 500, preferably by adjusting the height of the height-adjustable foot devices 501; S1710 wedging, if/where needed

## Claims

1. A grid base (500) for an automated storage and retrieval system (1000) comprising a plurality of vertically extending structural upright members (104) disposed to form a storage grid (100) defining a plurality of vertically extending storage columns (102) within each of which one or more storage containers (112) maybe stacked, the grid base (500) comprising:
a plurality of foot devices (501) configured to support said grid base (500) over a floor (502); and,
a plurality of grid base rails (503) each extending in a longitudinal direction, wherein the grid base rails (503) are supported on said plurality of foot devices (501) over said floor (502), and each foot device (501) is supported on said floor (502).

2. The grid base (500) of claim 1, wherein one or more of the plurality of foot devices (501) are height-adjustable foot devices (501).

3. The grid base (500) of claim 1 or 2, wherein the plurality of grid base rails (503) are arranged parallel one another.

4. The grid base (500) of claim 1, 2 or 3, wherein the grid base rails (503) are configured to support, in use, said one or more storage containers (112).

5. The grid base (500) of any one of claims 1 to 4, wherein the grid base (500) is supported at a distance (D) above said floor (502), wherein said distance (D) is at least 1 cm or at least 5 cm or at least 10 cm or at least 15 cm or at least 20 cm.

6. The grid base (500) of any one of claims 1 to 5, wherein the grid base (500) is configured such that the plurality of foot devices (501) corresponds to said plurality of vertically extending structural upright members (104), respectively;
optionally, wherein the grid base (500) is configured such that each of the foot devices (501) is located, in use, under a respective one of the vertically extending structural upright members (104).

7. The grid base (500) of any one of claims 1 to 6, wherein each grid base rail (503) defines at least one foot-device mating feature (701) arranged to receive, or to be received by, a respective one of the foot devices (501);
optionally, wherein said foot-device mating feature (701) comprises one or more apertures (702) configured to receive corresponding one or more projections (601) defined by said foot device (501);
alternatively, wherein said foot-device mating feature (701) comprises one or more portions (1201) configured to be received in corresponding one or more recesses (1205) provided on said foot device (501).

8. The grid base (500) of any one of claims 1 to 7, wherein each grid base rail (503) defines at least one spacer-coupling feature (703) arranged to receive, or to be received by, a respective spacer (610) for spacing the grid base rails (503);
optionally, wherein said spacer-coupling feature (703) comprises one or more openings or slots (704) configured to receive corresponding one or more protrusions formed on said spacer (610);
alternatively, wherein said spacer-coupling feature (703) comprises one or more protrusions configured to be received in corresponding one or more openings or slots provided on said spacer (610).

9. The grid base (500) of any one of claim 1 to 8, wherein the grid base rails (503) each comprise one or more outwardly extending portions (620) configured to receive, in use, respective one or more peripheral portions (1112) of respective one or more undersides (113) of respective one or more storage containers (112), when said one or more storage containers (112) are stored in corresponding one or more storage columns (102) of the automated storage and retrieval system (1000).

10. The grid base (500) of any one of claims 1 to 9, wherein each of the foot devices (601) comprises a lower foot component (602) configured to be supported on said floor (502).

11. The grid base (500) of claims 9 and 10, wherein a width (W) of the lower foot component (602) measured at the floor (502) is greater than a gap (M) between opposed peripheral portions (1112) of respective containers (112) or greater than a maximum width of each of the grid base rails measured at said outwardly extending portions (620).

12. The grid base (500) of any one of the preceding claims when dependent upon claim 2, wherein each of the height-adjustable foot devices (501) comprises at least one height-adjustable upper component (603) designed to support a weight associated with the automated storage and retrieval system (1000).

13. The grid base (500) of claims 10 and 12 or of claims 11 and 12, when dependent upon claim 2, wherein each height-adjustable foot device (501) comprises an upper foot component (604) configured to directly and height-adjustably engage with said lower foot component (602);
optionally, wherein said lower foot component (602) and said upper foot component (604) are directly threadedly engaged directly one to the other;
alternatively, wherein said lower foot component (602) comprises a threaded nut (1501) rotatably engaged to said lower foot component (602), and said upper foot component (604) is threadedly engaged to said lower foot component via said threaded nut (1501);
alternatively, wherein said upper foot component (604) and said lower foot component (602) define a first sloping interface (1503), such as a planar inclined interface (1503).

14. The grid base (500) of any one of claims 1 to 13, wherein at least one foot device (501) further comprises a wedge device (609) disposed between the grid base rail (503) and a corresponding vertically extending structural upright member (104),
optionally, wherein the wedge device (609) comprises a lower wedge part (607) and an upper wedge part (603), which may optionally consist of said heigh-adjustable upper component (603).

15. The grid base (500) of claim 14, wherein said upper foot component (604) comprises a distal end (912) configured to receive said height-adjustable upper component (603), and wherein said lower wedge part (607) and height-adjustable upper component (603) define a second sloping interface (920, 931);
optionally, wherein said lower wedge part (607) is U-shaped.

16. The grid base (500) of claim 13, 14 or 15, wherein the upper foot component (604) comprises one or more support portions (910, 1510) configured to support an underside (605, 1205) of the respective grid base rail (503).

17. A storage grid (100) for an automated storage and retrieval system (1000), the storage grid (100) comprising:
a grid base (500) according to any one of the preceding claims; and
a plurality of vertically extending structural upright members (104) defining a plurality of vertically extending columns (102) within each of which one or more storage containers (112) may be stacked.

18. An automated storage and retrieval system (1000) comprising:
the storage grid (100) of claim 17;
one or more storage containers (112) each disposed within one of said vertically extending storage columns (102), optionally wherein two or more of said containers form stacks of storage containers (112) in one or more of said vertically extending storage columns (102);
a rail system (116) arranged on said storage grid (100) and comprising a first set of parallel top tracks (118) disposed in the longitudinal direction (108) and a second set of parallel top tracks (120) disposed in a direction (110) transversal to the longitudinal direction (108); and
one or more wheeled container-handling vehicles (122, 202, 204) adapted to travel on said rail system (116), the container-handling vehicles (122, 202, 204) being each equipped with a gripping and lifting device (304, 312) for removing storage containers (112) from the vertically extending storage columns (102) and for replacing the storage containers (112) in the vertically extending storage columns (102).

19. A kit of parts for assembling a grid base (500) according to any one of claims 1 to 16, or for assembling a storage grid (100) according to claim 17, or for assembling an automated storage and retrieval system (1000) according to claim 18.

20. A method of assembling a levellable or levelled grid base (500) according to any one of claims 1 to 16, or for assembling a storage grid (100) according to claim 17, or for assembling an automated storage and retrieval system (1000) according to claim 18, the method comprising:
providing a plurality of foot devices (501) on a floor (502);
supporting a plurality of grid base rails (503) on said plurality of foot devices (501), thereby forming said grid base (500) over said floor (502);
optionally, placing one or more storage containers (112) on said grid base rails; and,
when they are height-adjustable, adjusting (S1708) a height of at least one of said foot devices (501).
